# FASCICULE DE BREVET EUROPEEN

(11) **EP 2 965 855 B1**
(45) Date de publication et mention de la délivrance du brevet: **26.12.2018**
(21) Numéro de dépôt: 15172623.9
(22) Date de dépôt: 17.06.2015
(51) Int. Cl.: B23K 26/362, B23K 26/402, B29C 69/00, G04B 47/04

(54) **PROCEDE DE REALISATION D'UN MOTIF EN RELIEF, EN UN MATERIAU DE TYPE POLYMERE, SUR UN SUBSTRAT**
HERSTELLUNGSVERFAHREN EINES RELIEFMOTIVS AUS EINEM MATERIAL VOM TYP POLYMER AUF EINEM SUBSTRAT
METHOD FOR PRODUCING A RAISED PATTERN, IN A POLYMER-TYPE MATERIAL, ON A SUBSTRATE

(30) Priorité: 17.06.2014 CH 9162014
(43) Date de publication de la demande: 13.01.2016
(73) Titulaire: Mestel SA, 1636 Broc (CH)
(72) Inventeur: De Boer, Philip, 1299 Crans-pres-Celigny (CH)
(74) Mandataire: e-Patent SA

(56) Documents cités:
- EP-A1- 2 363 036

## Description

### Domaine technique

La présente invention concerne un procédé de réalisation d'un motif en relief, en un matériau de type polymère, sur un substrat. A titre d'exemple non limitatif, le procédé selon l'invention peut notamment permettre la réalisation d'un tel motif en relief sur un substrat défini par un composant susceptible de servir dans la réalisation d'une montre.

De manière avantageuse, le présent procédé peut être mis en oeuvre sur une surface du substrat qui aurait été préalablement finie sans altération de sa finition.

Par motif en relief, il convient de comprendre ici tout type de forme prédéfinie, notamment toute forme figurative ou non figurative, voire du texte. En particulier, le procédé selon l'invention peut être mis à profit pour apposer le signe d'une marque déposée, et/ou d'un logo correspondant, sur au moins un composant d'un produit fini commercialisé sous cette marque déposée.

De manière préférée, le matériau utilisé pour la réalisation du motif en relief est avantageusement pris dans le groupe comprenant les élastomères, les résines époxy et les laques à base de polyuréthane.

Par ailleurs, le substrat peut être de toute nature permettant l'application d'un matériau du type qui vient d'être mentionné, notamment en métal ou alliage métallique, ou en céramique.

### Etat de la technique

Des procédés de dépôt de matériaux de type polymère sur la surface d'un substrat sont déjà connus, en particulier dans le domaine de l'horlogerie.

A titre d'exemple, le brevet EP 2316299 B1 divulgue un procédé d'application d'un élastomère sur un substrat présentant au moins un relief, de telle manière que la surface finale de la couche d'élastomère soit agencée en continuité avec la surface du relief. Ce document prévoit en outre qu'un même traitement de surface soit finalement appliqué sur l'ensemble de la surface, comme par exemple un polissage ou un satinage, pour obtenir des états de surface similaires sur le relief et à la surface de l'élastomère.

De manière générale, le dépôt de tels matériaux sur un substrat est réalisé à l'intérieur de cavités ménagées dans la surface du substrat, notamment avec l'idée qu'une telle approche permet d'améliorer l'ancrage de ces matériaux sur le substrat et d'éviter qu'ils ne soient facilement arrachés.

La demande de brevet EP 2363036 A1 décrit un enseignement similaire.

### Divulgation de l'invention

Un but de la présente invention est de proposer une alternative aux procédés connus de l'art antérieur en proposant un procédé permettant de réaliser un motif en relief sur une surface continue, éventuellement finie, d'un substrat, c'est-à-dire également sur la surface d'un substrat qui ne présente pas de cavité.

A cet effet, le procédé de réalisation d'un motif en relief selon l'invention comprend les étapes consistant à:
a) se munir d'un substrat présentant une surface libre,
b) déposer une première couche sacrificielle sur au moins une partie de la surface libre, avec une épaisseur prédéfinie,
c) graver la première couche sacrificielle, sensiblement jusqu'à la surface libre du substrat, de manière à définir des cavités à remplir correspondant au motif à réaliser,
d) déposer le matériau de type polymère sur le substrat de telle manière qu'au moins les cavités à remplir sont remplies avec le matériau de type polymère,
e) procéder à une ablation du surplus éventuel de matériau de type polymère situé en dehors des cavités à remplir,
f) procéder à une ablation sélective de la première couche sacrificielle en préservant le matériau de type polymère qui était situé à l'intérieur des cavités à remplir, de manière à définir le motif en relief sur la surface libre du substrat.

Grâce à ces caractéristiques, un motif en relief peut être réalisé sur tout type de surface, en particulier sur une surface continue, c'est-à-dire une surface ne comportant pas de cavité délimitée par au moins une arête. Ainsi, un motif en relief selon la présente invention peut avantageusement être réalisé sur une surface dégagée, éventuellement sensiblement plane. En effet, la Demanderesse a constaté que les motifs en relief obtenus par la mise en oeuvre de ce procédé présentent une résistance à l'arrachement satisfaisante, contre toute attente, quand bien même ils ne présentent pas de portion logée dans une cavité qui aurait été préalablement ménagée dans la surface du substrat. Autrement dit, un motif en relief réalisé par la mise en oeuvre du procédé selon l'invention présente un volume prédéfini délimité par au moins deux surfaces dont l'une est sensiblement continue et assure la liaison mécanique du motif en relief à la surface libre continue du substrat, et l'autre ou les autres sont avantageusement libres de toute interaction avec le substrat.

Le motif peut présenter tout type de forme et toute épaisseur souhaités. De manière préférée, l'épaisseur du motif en relief obtenu pourra être inférieure à 2mm, préférablement inférieure à 1mm, encore plus préférablement comprise sensiblement entre 0,1 et 0,2mm.

Par ailleurs, la réalisation de motifs en relief selon la présente invention est possible sur une surface libre du substrat qui serait préalablement finie, sans en altérer la finition. En effet la surface libre est protégée par la première couche sacrificielle pendant le dépôt du matériau de type polymère et, surtout, pendant l'étape d'ablation du surplus de ce matériau.

En outre, la surface du matériau déposé peut être soumise à toute finition souhaitée, tandis que la surface libre du substrat est toujours protégée par au moins l'une des couches sacrificielles, ce qui permet de réaliser des finitions de surface différentes, d'une part, sur le motif en relief et, d'autre part, sur le substrat.

La première couche sacrificielle doit être suffisamment rigide pour permettre une définition précise des cavités à remplir qui vont permettre la formation du motif en relief. Elle peut être réalisée en tout matériau adapté comme un composé métallique ou une résine époxy par exemple.

Dans une variante de réalisation du procédé selon l'invention, il est possible de prévoir qu'une deuxième couche sacrificielle est déposée sur la première couche sacrificielle préalablement à la définition des cavités à remplir. Les première et deuxième couches sacrificielles sont alors gravées en une seule ou en plusieurs étapes lors de la mise en oeuvre de l'étape c). De plus, la deuxième couche sacrificielle est alors préférablement éliminée préalablement à l'ablation de la première couche sacrificielle lors de la mise en oeuvre de l'étape f).

En effet, il peut être préférable de prévoir une deuxième couche sacrificielle, suivant le mode opératoire retenu, éventuellement en fonction des matériaux impliqués dans la mise en oeuvre du procédé. Dans ce cas, on peut prévoir que la deuxième couche sacrificielle est par exemple une résine photosensible, éliminée par attaque chimique par exemple, la première couche sacrificielle pouvant alors avantageusement être de type métallique.

Suivant une variante de réalisation préférée, la surface libre du substrat présente une finition mécanique prise dans le groupe comprenant le satinage, le brossage, le polissage et le sablage.

Suivant un mode de réalisation avantageux, le procédé comprend l'étape supplémentaire, avant l'étape d), consistant à:
c') déposer une couche d'un agent d'adhérisation au moins dans les cavités à remplir.

Par ailleurs, de manière avantageuse, on peut prévoir que l'ablation sélective de la première couche sacrificielle à l'étape f) est réalisée par traitement laser.

On peut également prévoir que le procédé comprend une étape supplémentaire consistant à mettre en oeuvre un traitement de surface de finition sur le motif en relief.

En effet, tant qu'au moins l'une des couches sacrificielles n'est pas retirée de la surface libre du substrat, un traitement de surface de finition peut être appliqué à la surface du motif en relief sans risque de causer des dommages à la surface libre du substrat.

Il est également possible de prévoir que le traitement de surface de finition sur le motif en relief est effectué conjointement à la mise en oeuvre de l'étape e) ou de l'étape f).

Grâce à une telle caractéristique, la surface du motif en relief peut être finie avec le type de finition souhaitée directement en fin d'ablation du surplus, ce qui représente un gain de temps non négligeable.

Par ailleurs, on peut prévoir que le procédé comprend l'étape supplémentaire, avant l'étape d), consistant à:
c") mettre en oeuvre un traitement de préparation de la surface destinée à recevoir le matériau de type polymère à l'étape d).

La mise en oeuvre d'une telle étape est bien entendu optionnelle et dépend de la nature du matériau dans les régions où le matériau de type polymère est appliqué, de l'état de surface du fond de la cavité à remplir, ainsi que de la nature du matériau utilisé pour former le motif en relief.

De manière générale, le procédé qui vient d'être décrit peut avantageusement être mis à profit pour effectuer la réalisation d'un motif en relief sur un composant horloger définissant un substrat en métal, en alliage métallique ou en céramique.

Par ailleurs, le matériau utilisé pour la réalisation du motif en relief est avantageusement pris dans le groupe comprenant les élastomères, les résines époxy et les laques à base de polyuréthane.

De manière préférée, la présente invention concerne également un composant horloger, comportant au moins une portion définissant un substrat ayant une surface libre continue, présentant une finition mécanique prise dans le groupe comprenant le satinage, le brossage, le polissage et le sablage, et portant au moins un motif en relief réalisé en un matériau de type polymère et présentant les caractéristiques énoncées plus haut.

De manière avantageuse, le motif en relief présente au moins une surface libre ayant une finition prise dans le groupe comprenant le satinage, le brossage, le sablage et la micro-structuration par faisceau laser.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1 représente une vue schématique partielle d'un substrat, en coupe transversale, illustrant une première étape de préparation à la mise en oeuvre d'un mode de réalisation préféré du procédé selon l'invention;
- la figure 2 représente une vue similaire à celle de la figure 1, illustrant des étapes de mise en oeuvre d'un mode de réalisation préféré du procédé selon l'invention;
- la figure 3 représente une vue similaire à celle de la figure 1, illustrant une étape supplémentaire de mise en oeuvre d'un mode de réalisation préféré du procédé selon l'invention;
- la figure 4 représente une vue similaire à celle de la figure 1, illustrant des étapes supplémentaires de mise en oeuvre d'un mode de réalisation préféré du procédé selon l'invention;
- la figure 5 représente une vue similaire à celle de la figure 1, illustrant une étape supplémentaire de mise en oeuvre d'un mode de réalisation préféré du procédé selon l'invention;
- la figure 6 représente une vue similaire à celle de la figure 1, illustrant une étape supplémentaire de mise en oeuvre d'un mode de réalisation préféré du procédé selon l'invention, et
- la figure 7 représente une vue similaire à celle de la figure 1, illustrant une étape supplémentaire de mise en oeuvre d'un mode de réalisation préféré du procédé selon l'invention.

### Mode(s) de réalisation de l'invention

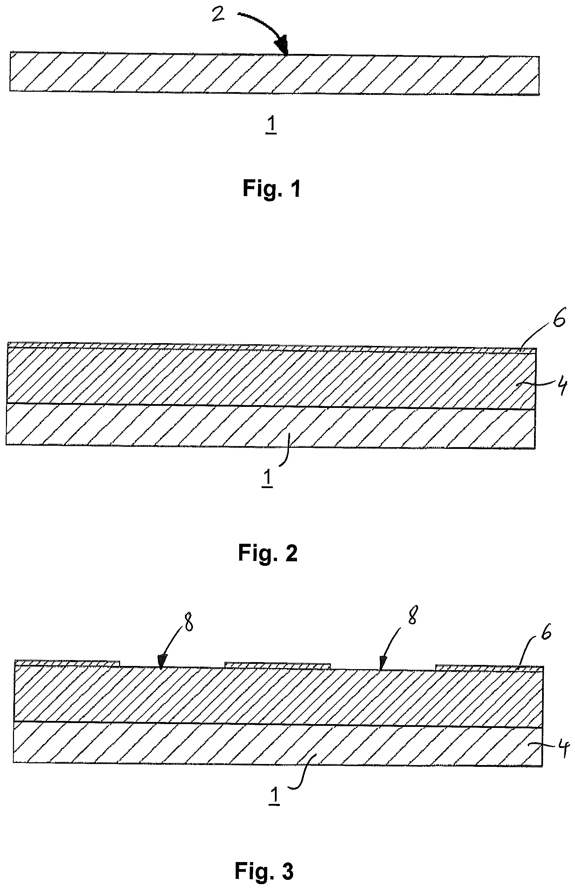

Les figures 1 à 7 illustrent le déroulement, étape par étape, d'un exemple de mise en oeuvre d'un procédé de réalisation d'un motif en relief sur un substrat, selon un mode de réalisation préféré de la présente invention.

Comme déjà mentionné plus haut, par motif en relief, il convient de comprendre ici tout type de forme prédéfinie, notamment toute forme figurative ou non figurative, voire du texte. En particulier, le procédé selon l'invention peut être mis à profit pour apposer le signe d'une marque déposée, et/ou d'un logo correspondant, sur au moins un composant d'un produit fini commercialisé sous cette marque déposée. Bien entendu, la notion de motif inclut également ici un ensemble d'éléments en relief qui seraient disjoints les uns des autres sur la surface d'un substrat.

La figure 1 illustre une première étape préalable au procédé selon la présente invention consistant à se munir d'un substrat 1 qui peut notamment être composé au moins partiellement d'un métal, d'un alliage métallique ou d'une céramique. Bien entendu, l'homme du métier pourra considérer d'autres matériaux adaptés à la mise en oeuvre du présent procédé sans sortir du cadre de l'invention.

Le substrat 1 comporte une surface libre 2 qui peut être brute ou présenter n'importe quel type de finition, comme par exemple une finition mécanique de type satinage, brossage, polissage ou encore sablage.

La surface libre 2 peut également présenter divers types de géométries sans sortir du cadre de l'invention. Comme cela a été mentionné précédemment, la surface libre 2 peut en particulier être continue, c'est-à-dire qu'elle peut ne pas présenter de cavité qui aurait été ménagée préalablement à la mise en oeuvre du procédé selon l'invention. La surface libre 2 peut notamment être sensiblement plane, comme illustré sur les figures.

La figure 2 illustre des premières étapes de mise en oeuvre du procédé selon la présente invention consistant à déposer des première et deuxième couches sacrificielles 4 et 6 sur la surface libre 2 du substrat 1.

La première couche sacrificielle 4 est métallique, par exemple en argent ou en cuivre, et peut être déposée par la mise en oeuvre de toute méthode connue adaptée, comme par exemple un dépôt galvanique. Elle peut préférablement être déposée avec une épaisseur allant jusqu'à 2mm, préférablement inférieure à 1mm, encore plus préférablement comprise entre 0,1 et 0,2mm.

La deuxième couche sacrificielle 6 est constituée d'une résine photosensible conventionnelle et peut être déposée par toute méthode connue et adaptée. Typiquement, la deuxième couche sacrificielle 6 peut présenter une épaisseur inférieure à 1mm, préférablement inférieure à 0,5mm, encore plus préférablement inférieure à 0,1mm.

Comme mentionné plus haut, la mise en place de la deuxième couche sacrificielle 6 peut être omise sans sortir du cadre de la présente invention.

La figure 3 illustre une étape supplémentaire du procédé selon la présente invention, optionnelle dans le cas d'une mise en oeuvre avec une seule couche sacrificielle, au cours de laquelle la deuxième couche sacrificielle 6 est gravée de manière sélective, pour rendre accessibles des portions 8 de la première couche sacrificielle 4 correspondant au motif à réaliser. Toute méthode connue et adaptée peut être mise en oeuvre ici sans sortir du cadre de la présente invention, comme par exemple une méthode consistant à graver la deuxième couche sacrificielle 6 par attaque chimique, après l'avoir recouverte d'un masque permettant de protéger les régions qui ne correspondent pas au motif à réaliser et l'avoir activée par irradiation lumineuse.

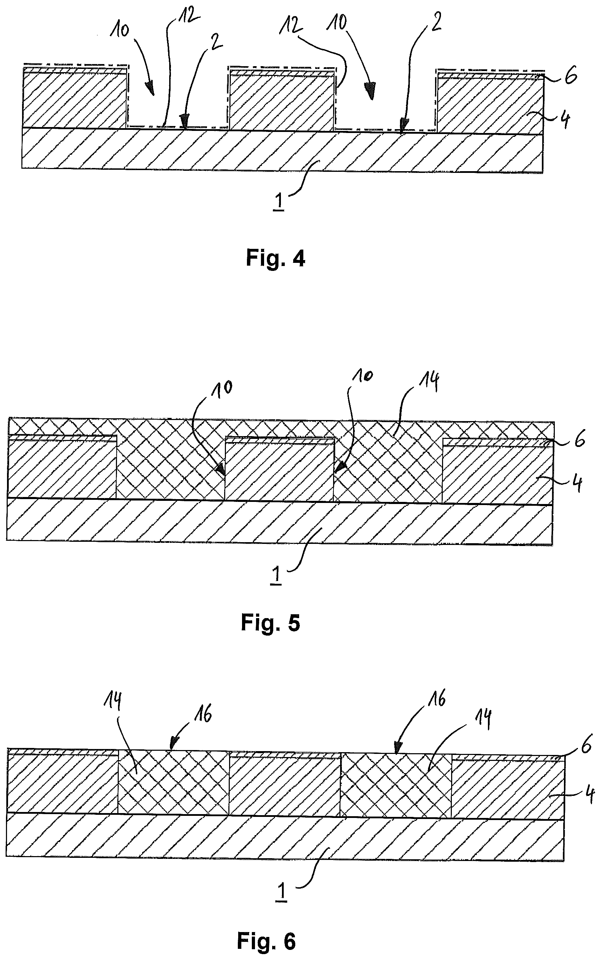

Le procédé selon l'invention comprend la mise en oeuvre d'une étape supplémentaire, dont le résultat est illustré sur la figure 4, consistant à éliminer la première couche sacrificielle 4 dans ses régions qui ont été exposées à l'étape précédente, c'est-à-dire au niveau de ses portions accessibles 8.

La première couche sacrificielle 4 est ainsi gravée ou creusée, de manière sélective, préférablement jusqu'à la surface libre 2 du substrat 1 pour définir des cavités 10 à remplir avec le matériau utilisé pour réaliser le motif en relief. Cette opération est préférablement réalisée par irradiation sélective de la première couche sacrificielle 4 au moyen d'un faisceau laser conventionnel, mais peut être réalisée par d'autres méthodes sans sortir du cadre de la présente invention.

De manière optionnelle, il est possible de prévoir ensuite le dépôt d'un agent d'adhérisation ou "primer" (schématisé par les traits discontinus référencés par 12) sur le substrat 1, au moins à l'intérieur des cavités 10, pour améliorer la tenue du polymère qui sera appliqué ensuite pour réaliser le motif en relief. L'homme du métier ne rencontrera pas de difficulté particulière pour effectuer le choix de l'agent d'adhérisation 12, en fonction de ses propres besoins et sans sortir du cadre de la présente invention. L'épaisseur typique préférée pour la couche de l'agent d'adhérisation est de l'ordre de 5 à 10µm, à titre illustratif non limitatif.

A titre optionnel, il est également possible de prévoir un traitement de surface de préparation préalablement, ou en alternative, au dépôt de l'agent d'adhérisation 12, comme par exemple un sablage ou une attaque chimique.

Le matériau 14 utilisé pour réaliser le motif en relief peut alors être déposé sur le substrat 1, tel qu'illustré sur la figure 5.

Ce matériau 14 est préférablement choisi dans le groupe comprenant les élastomères, les résines époxy et les laques à base de polyuréthane.

L'application du matériau 14 est réalisée de manière conventionnelle, comme par exemple par surmoulage. Le matériau 14 est déposé sur le substrat 1 de telle manière qu'au moins les cavités 10 sont remplies. En général, le dépôt donne lieu à un surplus de matériau 14 situé au-dessus de la deuxième couche sacrificielle 6, comme schématisé sur la figure 5. Un ordre de grandeur typique pour l'épaisseur de la couche de matériau 14 située au-dessus de la deuxième couche sacrificielle 6 est de 0.05 à 0.2mm, de manière non limitative.

Une opération de polymérisation et/ou de vulcanisation est préférablement prévue après dépôt du matériau 14.

Une étape supplémentaire du procédé selon la présente invention consiste à éliminer le surplus de matériau 14 situé en dehors des cavités 10. Le résultat de l'ablation correspondante est illustré sur la figure 6.

L'opération d'ablation peut être réalisée en plusieurs étapes, par la mise en oeuvre d'une ou plusieurs méthodes conventionnelles, comme par exemple un usinage mécanique (meulage, émerisage, etc..), une attaque chimique ou un traitement thermique, en particulier par faisceau laser.

De manière avantageuse, l'ablation peut être réalisée en une seule étape, au moyen d'un faisceau laser. Dans ce cas, on peut directement prévoir que la surface finale 16 du matériau 14 est microstructurée. Il est ainsi possible de réaliser n'importe quel type de motif sur la surface finale 16 du matériau 14, comme par exemple des clous de Paris voire un logo d'entreprise ou de marque.

En outre, l'ablation du surplus de matériau de remplissage 14 par faisceau laser permet une grande précision dans la réalisation de l'ablation, y compris lorsque le niveau de la surface finale 16 est situé plus bas que le niveau de la deuxième couche sacrificielle 6.

On notera qu'il est possible en complément, voire en alternative au traitement de finition par faisceau laser, de mettre en oeuvre un traitement de surface de finition sur la surface finale 16 du matériau 14 après ablation du surplus, comme par exemple un sablage. En effet, à ce stade, les première et deuxième couches sacrificielles 4 et 6 étant toujours présentes, la surface libre 2 du substrat 1 est protégée et ne peut être endommagée par un tel traitement de finition.

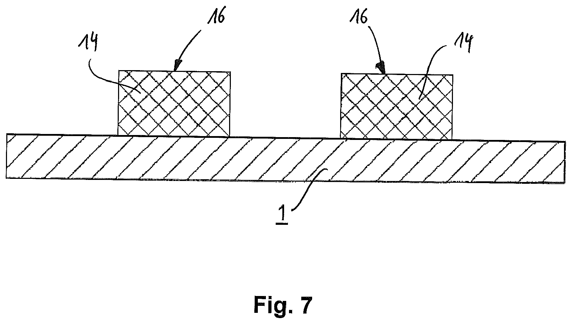

Lorsque le résultat souhaité est obtenu pour la surface finale 16 du matériau 14, les première et deuxième couches sacrificielles 4 et 6 peuvent être retirées de manière sélective, c'est-à-dire sans retirer le matériau 14, comme illustré sur la figure 7.

Ces opérations sont préférablement réalisées de manière conventionnelle, par exemple par attaque chimique pour le retrait de la deuxième couche sacrificielle 6, et par électrolyse pour la première couche sacrificielle 4.

Ainsi, la surface libre 2 du substrat 1 est remise à nu, avec la finition qu'elle présentait avant la mise en oeuvre du procédé selon l'invention, sauf dans les régions où le matériau 14 avait été déposé dans les cavités 10, donnant lieu à la réalisation du motif en relief souhaité. Ce dernier présente ainsi une seule surface assurant sa liaison à la surface libre du substrat, ses autres surfaces étant libres de toute interaction avec le substrat. Ainsi, par exemple, dans le cas d'un motif en relief de forme cylindrique, une première surface en forme de disque assure la liaison du motif en relief au substrat, tandis que l'enveloppe cylindrique latérale et la seconde surface en forme de disque sont libres de toute interaction avec le substrat.

Grâce au procédé qui vient d'être décrit, il est possible de réaliser toute forme de motif en relief sur un grand choix de substrats, d'aspect brut ou fini, comme mentionné précédemment, notamment toute forme figurative ou non figurative, voire du texte. En particulier, le procédé selon l'invention peut être mis à profit pour apposer le signe d'une marque déposée, et/ou d'un logo correspondant, sur au moins un composant d'un produit fini commercialisé sous cette marque déposée.

En particulier, le procédé selon l'invention peut être mis en oeuvre pour appliquer des motifs en relief sur des composants ou produits commercialisés dans le domaine du luxe, notamment en horlogerie, en bijouterie, en téléphonie, etc..., soit à des fins décoratives ou d'identification d'une marque, par exemple, soit à des fins techniques, pour réaliser des marquages fonctionnels (comme les chiffres et/ou index sur une lunette de montre), par exemple, voire mécaniques lorsque les propriétés élastiques du matériau 14 sont exploitées. A titre d'exemples d'applications mécaniques, on peut noter que les motifs en relief selon la présente invention peuvent permettre de rattraper un jeu (roue dentée, butée, cercle d'emboitage, joints, etc...), d'absorber des chocs (éléments de l'habillage d'une montre ou dans le mouvement horloger directement), de prévenir des frottements entre deux composants, voire de jouer un rôle d'isolant thermique, à titre indicatif non limitatif.

## Revendications

1. Procédé de réalisation d'un motif en relief, en un matériau (14) de type polymère, sur une surface libre (2) d'un substrat (1) comprenant les étapes consistant à:
a) se munir d'un substrat (1) présentant une surface libre (2),
b) déposer une première couche sacrificielle (4) sur au moins une partie de ladite surface libre (2), avec une épaisseur prédéfinie,
c) graver ladite première couche sacrificielle (4), sensiblement jusqu'à ladite surface libre (2) du substrat (1), de manière à définir des cavités (10) à remplir correspondant audit motif à réaliser,
d) déposer ledit matériau (14) de type polymère sur ledit substrat (1) de telle manière qu'au moins lesdites cavités (10) soient remplies avec ledit matériau (14) de type polymère,
e) procéder à une ablation du surplus éventuel de matériau (14) de type polymère situé en dehors desdites cavités (10),
f) procéder à une ablation sélective de ladite première couche sacrificielle (4) en préservant le matériau (14) de type polymère qui était situé à l'intérieur desdites cavités (10) à remplir, de manière à définir ledit motif en relief sur la surface libre (2) dudit substrat (1).

2. Procédé selon la revendication 1, **caractérisé en ce qu'**une deuxième couche sacrificielle (6) est déposée sur la première couche sacrificielle (4) préalablement à la définition desdites cavités (10) à remplir, lesdites première et deuxième couches sacrificielles (4, 6) étant gravées en une seule ou en plusieurs étapes lors de la mise en oeuvre de l'étape c), ladite deuxième couche sacrificielle (6) étant préférablement éliminée préalablement à l'ablation de la première couche sacrificielle (4) lors de la mise en oeuvre de l'étape f).

3. Procédé selon la revendication 1 ou 2, **caractérisé en ce que** ladite surface libre (2) du substrat (1) présente une finition mécanique, préalablement à la mise en oeuvre de l'étape b), prise dans le groupe comprenant le satinage, le brossage, le polissage et le sablage.

4. Procédé selon l'une des revendications précédentes, comprenant l'étape supplémentaire, avant l'étape d), consistant à:
c') déposer une couche d'un agent d'adhérisation (12) au moins dans lesdites cavités (10) à remplir.

5. Procédé selon l'une des revendications précédentes, **caractérisé en ce que** ladite ablation sélective de ladite première couche sacrificielle (4) à l'étape f) est réalisée par traitement laser.

6. Procédé selon l'une des revendications précédentes, **caractérisé en ce qu'**il comprend une étape supplémentaire consistant à mettre en oeuvre un traitement de surface de finition sur ledit motif en relief.

7. Procédé selon la revendication 6, **caractérisé en ce que** ledit traitement de surface de finition sur ledit motif en relief est effectué conjointement à la mise en oeuvre de l'étape e) ou de l'étape f).

8. Procédé selon l'une des revendications précédentes, **caractérisé en ce qu'**il comprend l'étape supplémentaire, avant l'étape d), consistant à:
c") mettre en oeuvre un traitement de préparation au moins des surfaces destinées à recevoir ledit matériau (14) de type polymère à l'étape d).

9. Procédé selon l'une des revendications précédentes, **caractérisé en ce qu'**il est mis en oeuvre pour effectuer la réalisation d'un motif en relief sur un composant horloger définissant un substrat en métal, en alliage métallique ou en céramique.

10. Procédé selon l'une des revendications précédentes, **caractérisé en ce que** ledit matériau (14) de type polymère est pris dans le groupe comprenant les élastomères, les résines époxy et les laques à base de polyuréthane.

## Patentansprüche

1. Verfahren zur Erstellung eines Reliefmusters auf Polymermaterial (14) auf der freien Oberfläche (2) eines Substrats (1), das folgende Schritte umfasst:
a) Bereitstellung eines Substrats (1) mit einer freien Oberfläche (2),
b) Aufbringen einer ersten Opferschicht (4) auf mindestens einen Teil der freien Oberfläche (2) mit einer festgelegten Dicke,
c) Sichtbares Ätzen der ersten Opferschicht (4) bis zu der freien Oberfläche (2) des Substrats (1), so dass Hohlräume (10) entstehen, die entsprechend dem zu erreichenden Muster entsprechen,
d) Aufbringen des Polymermaterials (14) auf das Substrat (1) so, dass mindestens die Hohlräume (10) mit dem Polymermaterial (14) gefüllt werden,
e) Ablation eventuell vorhandener Überschüsse des Polymermaterials (14) außerhalb der Hohlräume (10),
f) Selektive Ablation der ersten Opferschicht (4) unter Beibehaltung des Polymermaterials (14), das sich in den zu füllenden Hohlräumen (10) befindet, so dass auf der freien Oberfläche (2) des Substrats (1) das Reliefmuster entsteht.

2. Verfahren nach Anspruch 1, **dadurch gekennzeichnet, dass** eine zweite Opferschicht (6) auf die erste Opferschicht (4) aufgebracht wird, und zwar bevor die zu füllenden Hohlräume (10) definiert werden, wobei die erste und die zweite Opferschicht (4, 6) in einem oder in mehreren Schritten geätzt werden, während Schritt c) durchgeführt wird, wobei die zweite Opferschicht (6) vor der Ablation der ersten Opferschicht (4) bei der Durchführung von Schritt f) eliminiert wird.

3. Verfahren nach Anspruch 1 oder 2, **dadurch gekennzeichnet, dass** die freie Oberfläche (2) des Substrats (1) eine Oberfläche darstellt, die vor der Durchführung von Schritt b) mechanisch behandelt wurde, und zwar durch Satinieren, Abbürsten, Polieren und Sandstrahlen.

4. Verfahren nach einem der vorgenannten Ansprüche mit einem zusätzlichen Schritt vor Schritt d), bestehend aus folgenden Schritten:
c') Aufbringen einer Schicht aus einem Haftvermittler (12), zumindest in den zu füllenden Hohlräumen (10).

5. Verfahren nach einem der vorgenannten Ansprüche, **dadurch gekennzeichnet, dass** die selektive Ablation der ersten Opferschicht (4) in Schritt f) durch Laserbearbeitung erfolgt.

6. Verfahren nach einem der vorgenannten Ansprüche, **gekennzeichnet durch** einen zusätzlichen Schritt zur Behandlung der Oberflächenbeschaffenheit bei dem Reliefmuster.

7. Verfahren nach Anspruch 6, **dadurch gekennzeichnet, dass** die Oberflächenbehandlung auf dem Reliefmuster zusammen mit der Durchführung von Schritt e) oder Schritt f) durchgeführt wird.

8. Verfahren nach einem der vorgenannten Ansprüche, **dadurch gekennzeichnet, dass** es vor Schritt d) den zusätzlichen Schritt umfasst; dieser besteht aus:
c") Behandlung zur Vorbereitung zumindest der Oberflächen, die mit dem Polymermaterial (14) in Schritt d) in Kontakt kommen sollen.

9. Verfahren nach einem der vorgenannten Ansprüche, **dadurch gekennzeichnet, dass** es durchgeführt wird, um ein Reliefmuster auf einer Komponente für Uhren herzustellen, die ein Substrat aus Metall, Metalllegierung oder Keramik darstellt.

10. Verfahren nach einem der vorgenannten Ansprüche, **dadurch gekennzeichnet, dass** das Polymermaterial (14) aus der Gruppe von Elastomeren, Epoxidharzen und Lacken auf Polyurethan-Basis stammt.

## Claims

1. Method for realising a relief pattern, with a polymer-type material (14), on a free surface (2) of a substrate (1) comprising the steps of:
a) providing a substrate (1) having a free surface (2),
b) depositing a first sacrificial layer (4) on at least a portion of the said free surface (2), with a predefined thickness,
c) engraving the said first sacrificial layer (4), approximately to the said free surface (2) of the substrate (1), so as to define cavities (10) to be filled corresponding to the said pattern to be made,
d) depositing the said polymer-type material (14) on the said substrate (1) in such a way that at least the said cavities (10) are filled with the said polymer-type material (14),
e) proceeding to the ablation of any surplus of polymer-type material (14) located outside the said cavities (10),
f) proceeding to the selective ablation of the said first sacrificial layer (4) while preserving the polymer-type material (14) which was located inside the said cavities (10) to be filled, so as to define the said relief pattern on the free surface (2) of the said substrate (1).

2. Method according to claim 1, **characterised in that** a second sacrificial layer (6) is deposited on the first sacrificial layer (4) prior to the definition of the said cavities (10) to be filled, the said first and second sacrificial layers (4, 6) being engraved in one or several steps during the implementation of step c), the said second sacrificial layer (6) being preferably removed prior to the ablation of the first sacrificial layer (4) when implementing step f).

3. Method according to claim 1 or 2, **characterised in that** the said free surface (2) of the substrate (1) has a mechanical finishing, prior to the implementation of step b), selected from the group comprising satin-finishing, brushing, polishing and sandblasting.

4. Method according to one of the preceding claims, comprising the additional step, prior to step d), of:
c') depositing a layer of an adhesion agent (12) at least in the said cavities (10) to be filled.

5. Method according to one of the preceding claims, **characterised in that** the said selective ablation of the said first sacrificial layer (4) in step f) is performed by laser treatment.

6. Method according to one of the preceding claims, **characterised in that** it comprises an additional step of implementing a finishing surface treatment on the said relief pattern.

7. Method according to claim 6, **characterised in that** the said finishing surface treatment on the said relief pattern is made in conjunction with the implementation of step e) or step f).

8. Method according to one of the preceding claims, **characterised in that** it comprises the additional step, prior to step d), of:
c") implementing a preparation treatment on at least the surfaces intended to receive the said polymer-type material (14) in step d).

9. Method according to one of the preceding claims, **characterised in that** it is implemented to carry out the realisation of a relief pattern on a watch component defining a substrate of metal, metal alloy or ceramic.

10. Method according to one of the preceding claims, **characterised in that** the said polymer-type material (14) is selected from the group comprising elastomers, epoxy resins and polyurethane-based lacquers.
